# EUROPÄISCHE PATENTANMELDUNG

(11) **EP 0 633 048 A1**
(43) Veröffentlichungstag der Anmeldung: **11.01.1995**
(21) Anmeldenummer: 94106937.9
(22) Anmeldetag: 04.05.1994
(51) Int. Cl.: B01D 3/00, B01J 21/06

(54) **Verfahren zur Durchführung chemischer Reaktionen in Reaktionsdestillationskolonnen**

(30) Priorität: 08.07.1993 DE 4322712
(71) Anmelder: HÜLS AKTIENGESELLSCHAFT, D-45764 Marl (DE)
(72) Erfinder: Kahsnitz, John, Dr., D-45721 Haltern (DE); Steding, Frank, Dr., D-45768 Marl (DE); Oberholz, Alfred, Dr., D-45770 Marl (DE); Nierlich, Franz, Dr., D-45768 Marl (DE); Nowitzki, Bernd, Dr., D-45772 Marl (DE)

(57) **Zusammenfassung**

Beansprucht wird ein Verfahren zur Durchführung chemischer Reaktionen in Reaktionsdestillationskolonnen an sauren Katalysatoren. Die Verbesserung besteht darin, daß man die Reaktion an einem anorganischen Katalysator in Form von Füllkörpern, die oberhalb des Sumpfes angeordnet sind, durchführt.

## Beschreibung

Die vorliegende Erfindung betrifft ein Verfahren zur Durchführung chemischer Reaktionen, nicht jedoch Alkylierungen von Aromaten, in Reaktionsdestillationskolonnen an sauren Katalysatoren.

Bei Reaktionen an Katalysatoren in Destillationskolonnen erfolgt unmittelbar nach der Reaktion eine destillative Trennung der Reaktionsprodukte. Derartige Reaktionen sind bekannt.

In DE-A-39 30 515 werden Formkörper aus makroporösen Ionenaustauschern angewandt, um verschiedene Reaktionen, im besonderen die Synthese von Methyl-tert.-butylether, in Kolonnen durchzuführen. Die Ionenaustauscher-Formkörper können dabei auch mit Metallen der 7. und 8. Nebengruppe des Periodensystems dotiert sein.

Nach EP-A-0 415 310 werden tertiäre Alkohole aus Isoolefinen und Wasser an sauren Kationenaustauscherharzen in Destillationskolonnen hergestellt.

Ionenaustauscherharze sind jedoch temperaturempfindlich. So können sie nur kurzfristig bei Temperaturen von 150 °C angewandt werden. Für Ionenaustauscher im Dauerbetrieb werden dagegen nur Temperaturen bis etwa 110 °C eingestellt, was für einige Reaktionen zu einer stark erhöhten und wirtschaftlich uninteressanten Reaktionszeit führt.

Gemäß EP-B-0 008 860 kann Methyl-tert.-butylether in Reaktionsdestillationskolonnen an sauren Ionenaustauschern in Tuchtaschen eines Tuchgurtes hergestellt werden. Abgesehen davon, daß Ionenaustauscher temperaturempfindlich sind und die Tuchtaschen aufbrechen können, muß hier beim Austausch von inaktiviertem Katalysator die ganze Anlage stillgelegt werden. Dabei kann auch immer nur ein ganzer Tuchgurt ausgewechselt werden. Es ist nicht möglich, kleine Katalysatorbereiche schnell auszuwechseln. Eine Produktion muß zumindest für mehrere Stunden unterbrochen werden.

In EP-A-0 302 336 wird ein Verfahren zur Spaltung von Alkyl-tert.-alkylethern beschrieben. Als Katalysatoren werden dabei vorzugsweise saure Kationenaustauscher eingesetzt, man kann jedoch auch saures SiO₂ oder saures Al₂O₃ verwenden. Der Katalysator wird jedoch am Fuß der Kolonne, also im flüssigen Bereich angeordnet. Die Reaktion findet nur in der Flüssigphase statt. Es handelt sich beim Katalysator deshalb nicht um eine Destillationspackung im gasförmig-flüssigen Bereich. Der Katalysator hat hier keine rektifikative Destillationswirkung. Die Anordnung entspricht einem Kessel mit aufgesetzter Kolonne.

In DE-C-26 58 569 wird die Herstellung von geformten, hauptsächlich TiO₂ enthaltenden Katalysatoren beschrieben. Dabei wird aus Metatitansäuregel TiO₂ hergestellt, extrudiert und dann bei 200 bis 800 °C calciniert. Die Katalysatoren sind zur Entfernung von Stickoxiden aus Gasen oder zur katalytischen Oxidation von Buten zu Essigsäure in der Gasphase einsetzbar. Reaktionen in einem gasförmig-flüssigen System werden nicht angegeben.

Nach EP-B-0 189 683 wird die Alkylierung aromatischer Verbindungen in einer Reaktionsdestillationskolonne an einem Festbett mit saurer katalytischer Destillationsstruktur durchgeführt. Dabei werden im besonderen saure Kationenaustauscherharze und auch saure Molekularsiebe vom Typ SiO₂/Al₂O₃ vorzugsweise in Taschen als Katalysatoren eingesetzt.

Einen Hinweis auf andere Katalysatoren, insbesondere auf Oxide höheren Molekulargewichts, oder auf andere chemische Reaktionen enthält diese Patentschrift nicht.

Gemäß DE-A-40 34 074 können Alkylglycoside in einer Reaktionsdestillationskolonne hergestellt werden. Die Reaktion wird dabei homogen durch flüssige Säuren katalysiert. Der Katalysator wird hier mit dem Reaktionsprodukt ausgetragen. Die Alkylglycoside müssen deshalb nach der Reaktion durch Alkali neutralisiert werden.

Aufgabe der vorliegenden Erfindung war es, ein Verfahren zur Durchführung chemischer Reaktionen, wobei die Aromatenalkylierung jedoch ausgenommen wird, in Reaktionsdestillationskolonnen zu entwickeln, bei dem der feste Katalysator temperaturstabil und leicht auswechselbar ist.

Die Aufgabe wird erfindungsgemäß dadurch gelöst, daß man die Reaktion an einem anorganischen Katalysator in Form von Füllkörpern, die oberhalb des Sumpfes angeordnet sind, durchführt.

Die Katalysator-Füllkörper bestehen im allgemeinen zu mehr als 60 % aus der katalytisch aktiven Substanz. Die weiteren Bestandteile sind Aktivatoren, Binde- und andere Hilfsmittel. Als katalytisch aktive Substanz kommen unter anderem anorganische Salze, saure Salze, Oxide, saure Oxide sowie Metalle in Betracht. Geeignet sind beispielsweise Oxide von Magnesium, Titan, Vanadin, Chrom, Mangan, Eisen, Kobalt, Nickel, Kupfer, Zink, Germanium, Zinn, Wismut, Zirkon, Niob, Molybdän, Rhodium, Ruthenium, Palladium, Silber, Wolfram oder Platin.

Die Katalysatoren weisen im wäßrigen Medium einen pH-Wert von < 7, vorzugsweise von < 3 auf.

Vorzugsweise werden Katalysatoren auf der Basis von Übergangsmetalloxiden verwendet. Dabei werden Katalysatoren, die ZrO₂, TiO₂ oder Mischungen dieser Oxide enthalten, ganz besonders bevorzugt.

In besonders bevorzugten Ausführungsformen weisen TiO₂ und ZrO₂ enthaltende Katalysatoren als weitere Bestandteile Tone, SiO₂, Al₂O₃, B₂O₃ bzw. H₃BO₃, P₂O₅ oder Phosphate, Sulfate, Nitrate, Fluoride, andere Übergangsmetalloxide oder -salze, Isopolysäuren, beispielsweise die des Wolframs, sowie Heteropolysäuren auf.

TiO₂ kann in der Anatas-, Rutil- oder Brookit-Modifikation verwendet werden. Man kann beispielsweise pyrolytisch hergestelltes TiO₂ einsetzen. Vorzugsweise benutzt man jedoch TiO₂ in der Anatas-Modifikation, wie es z. B. beim Sulfatprozeß erhalten wird.

ZrO₂ wird vorzugsweise durch eine übliche Fällung oder durch gezielte Hydrolyse aus Lösungen von Zirkonylnitrat, -sulfat oder -chlorid und eine thermische Nachbehandlung erhalten. Einsetzbar sind auch mit Säuren behandelte, oberflächenreiche Zirkonoxide oder Zirkonoxidvorläuferstrukturen, wobei diese ebenfalls thermisch aktiviert werden.

Geeignete Füllkörper sind beispielsweise Waben, Pellets, Tabletten, Ringe, Füllringe mit Stegen, Röhrchen, Zylinder und andere Strangextrudate. Vorzugsweise werden die Katalysatoren in Form von Röhrchen und Ringen eingesetzt. Dabei haben die Röhrchen und Ringe im allgemeinen einen Innendurchmesser von 1 bis 100 mm, eine Wandstärke von 0,1 bis 20 mm und eine Länge von 5 bis 100 mm.

Die Füllkörper können beispielsweise analog zu dem Verfahren von DE-C-26 58 569 durch Extrusion und Calcinierung erhalten werden. Bei der Calcinierung von TiO₂ enthaltenden Katalysatoren wird im allgemeinen eine Temperatur von 350 bis 800 °C angewandt, bei ZrO₂ enthaltenden Katalysatoren wird eine Temperatur von 450 bis 900 °C bevorzugt.

Zusätzliche Komponenten können bereits bei der TiO₂- bzw. ZrO₂-Herstellung sowie bei der Füllkörperherstellung zugeführt werden. Die Substanzen können zum Beispiel in die Formmassen vor der Extrusion und nach Verfahren zur Imprägnierung eingebracht werden.

Die Füllkörper werden in den Reaktionsdestillationskolonnen im gasförmigflüssigen Bereich oberhalb des Sumpfes angeordnet. Sie haben dabei eine katalytische und eine destillative Wirkung, da gebildete flüchtige Komponenten an ihnen sofort rektifiziert werden.

Das vorliegende Verfahren eignet sich für gasförmig-flüssige chemische Reaktionen organisch chemischer Verbindungen. Dabei muß mindestens eine Komponente, Einsatzstoff oder Reaktionsprodukt, flüssig zugeführt bzw. abgezogen werden. Die Reaktion findet an den Formkörpern bei Temperaturen von vorzugsweise 50 bis 300 °C statt. Bei Temperaturen über 300 °C können Reaktionen ebenfalls durchgeführt werden, organische Verbindungen neigen dann jedoch verstärkt zu Vercrackungen und Nebenreaktionen. Besonders bevorzugt wird ein Temperaturbereich von 120 bis 300 °C, in dem Ionenaustauscher meist nicht mehr oder nicht mehr gut einsetzbar sind.

Das vorliegende Verfahren kann beispielsweise auf chemische Reaktionen, wie Umesterungen, Acetal- und Halbacetalbildung, Herstellung von Anhydriden und Cyclisierungen unter Wasser- oder Alkoholabspaltung, angewandt werden. Vorzugsweise werden nach dem Verfahren jedoch Synthesen von Ethern, Alkoholen und Estern, die Spaltungen dieser Produkte sowie Olefindimerisierungen durchgeführt. Besonders bevorzugt werden Etherspaltungen nach dem erfindungsgemäßen Verfahren ausgeführt.

Ethersynthesen werden im allgemeinen bei etwa 60 bis 150 °C durchgeführt. Beispiele für Ethersynthesen sind die Herstellung von Methyl-tert.-butylether (MTB) aus Methanol und Isobuten sowie von tert.-Amyl-methylether (TAME) aus Methanol und 2-Methylbuten-2. Für die Rückreaktionen, die Etherspaltungen, werden vorzugsweise Temperaturen von etwa 120 bis 220 °C eingestellt.

Estersynthesen aus Alkoholen und Säuren werden meist bei Temperaturen von etwa 90 bis 180 °C durchgeführt. Beispiele für Esterspaltungen sind die Herstellung der Methyl-, Ethyl- und Butylester der Ameisen-, Essig-, Propion- und Buttersäure. Die Esterspaltung an sauren Katalysatoren wird üblicherweise bei 100 bis 200 °C vorgenommen.

Für Alkoholsynthesen aus Olefinen und Wasser können Temperaturen aus einem breiten Temperaturbereich, abhängig von der Reaktivität und Flüchtigkeit von Olefinen und Alkoholen, angewandt werden. Alkoholsynthesen und -spaltungen werden meist bei Temperaturen von 100 bis 300 °C durchgeführt. Für die Octanol-Synthese liegt die Temperatur vorzugsweise bei 180 bis 250 °C, für die Spaltung von t-Butanol meist bei 130 bis 160 °C.

Das erfindungsgemäße Verfahren ermöglicht die Durchführung von chemischen Reaktionen bei hohen Temperaturen. Es eignet sich gut für kontinuierliche Produktionsanlagen. Beim Austausch des Katalysators sind nur kurze Produktionsunterbrechungen erforderlich. So reduziert sich beispielsweise die Standzeit einer Anlage von 3 Tagen bei Drahtnetzpackungen auf 3 Stunden. In besonderen Fällen kann der Katalysator sogar ohne Produktionsunterbrechung nach dem Prinzip eine Staubsaugers abgezogen und ergänzt werden. Bei der praktischen Durchführung der chemischen Reaktionen werden unter den Reaktionsbedingungen gasförmige Ausgangsverbindungen allgemein unterhalb und flüssige Komponenten oberhalb der Katalysatorschicht auf die Reaktionsdestillationskolonne gegeben.

Die folgenden Beispiele sollen die Erfindung verdeutlichen.

### Beispiel 1

Ein Katalysator, der 89,6 % TiO₂, 1,4 % Sulfat und 9,0 % Glasfaser enthält und einen pH-Wert von 2,2 aufweist (zur Bestimmung des pH-Wertes werden 3 g Katalysator in 10 g Wasser suspendiert), wird in Form von Röhrchen (dᵢ = 4 mm, dₐ = 10 mm, l = 10 - 25 mm) in einer Reaktionsdestillationskolonne mit 20 Glockenböden und dem Innendurchmesser dᵢ = 80,9 mm zwischen dem 5. und 6. Boden von oben eingebaut. Die Katalysatormasse beträgt insgesamt 1 300 g.

Für die nachfolgende Etherspaltung wird ein Druck von 22,4 bar sowie eine Sumpftemperatur von 160 °C eingestellt.

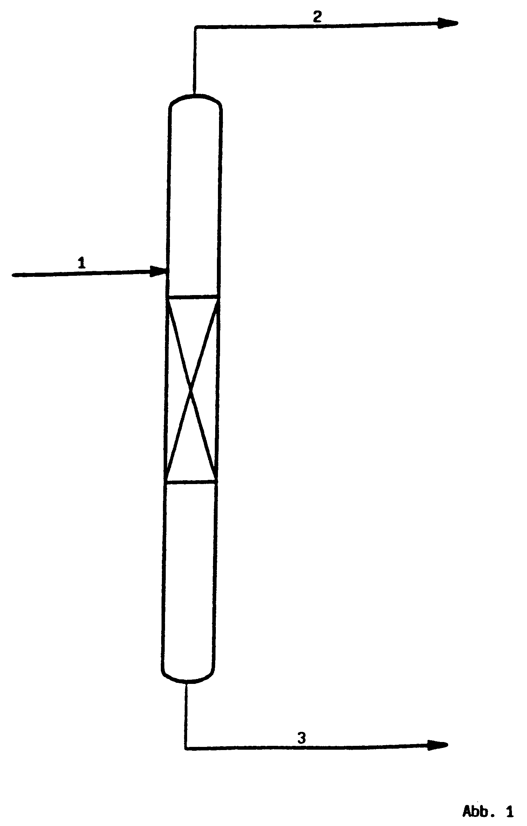

In der stationären Phase werden gemäß Abbildung 1 5,4 mol/h MTB über Leitung 1 zudosiert, 0,6 mol/h Methanol und 5,4 mol/h Isobuten über Leitung 2 abgezogen sowie 4,6 mol/h Methanol und 0,2 mol/h Isobuten über Leitung 3 ausgetragen.

### Beispiel 2

Es wird wie in Beispiel 1 verfahren. Man stellt jedoch einen Druck von 12,5 bar und eine Sumpftemperatur von 140 °C ein.

Bei kontinuierlicher Fahrweise werden 3,2 mol/h MTB über Leitung 1 zudosiert, 1,0 mol/h Methanol und 2,8 mol/h Isobuten über Leitung 2 abgezogen sowie 2,7 mol/h Methanol über Leitung 3 ausgetragen.

### Beispiel 3

Es wird der Katalysator von Beispiel 1 und eine Reaktionsdestillationskolonne gemäß Abbildung 1 mit einem Innendurchmesser dᵢ = 80 mm und eine Länge l = 3 m eingesetzt. Die Katalysatormasse beträgt insgesamt 3 100 g.

Die folgende Veresterung von Essigsäure mit n-Butanol wird bei Normaldruck und bei einer Sumpftemperatur von 130 °C durchgeführt. Am Kopf der Kolonne wird sowohl wäßrige als auch organische Phase zurückgeführt.

Bei stationärem Betrieb werden über Leitung 1 1,0 mol/h Essigsäure sowie 1,21 mol/h n-Butanol zudosiert. Über Leitung 2 werden 0,76 mol/h Butylacetat, 0,77 mol/h Wasser und 0,45 mol/h n-Butanol abgezogen. 0,24 mol/h nichtumgesetzte Essigsäure werden über Leitung 3 entnommen.

### Beispiel 4

Die hier verwendete Reaktionsdestillationskolonne besitzt einen Innendurchmesser dᵢ = 80 mm, und sie besteht aus 2 Teilen von je 2 m Länge. Der obere Teil ist mit Katalysator von Beispiel 1 in Form von zylindrischen Ringen (dᵢ = 8 mm, dₐ = 12 mm, l = 12 mm) gefüllt. Der untere teil ist mit einer katalysatorfreien geordneten Packung ausgerüstet.

Für die Buten-Dimerisierung wird ein Betriebsdruck von 12 bar und eine Sumpftemperatur von 242 °C eingestellt.

Im stationären Betrieb werden 2,55 kg/h 1-Buten, 2,05 kg/h Butan, 0,82 kg/h Isoocten und 0,11 kg/h Isododecen zudosiert, wobei der Zulauf unterhalb der Katalysatorpackung erfolgt. Über den Destillatstrom werden 1,44 kg/h 1-Buten sowie 2,02 kg/h Butan abgezogen. Im Sumpf fallen 0,004 kg/h 1-Buten, 0,03 kg/h Butan, 1,85 kg/h Isoocten und ca. 0,186 kg/h Isododecen an.

Bei einem Rücklaufverhältnis von ca. 10 beträgt der Umsatz von 1-Buten etwa 43 %.

## Patentansprüche

1. Verfahren zur Durchführung chemischer Reaktionen, ausgenommen Alkylierungen von Aromaten, in Reaktionsdestillationskolonnen an sauren Katalysatoren,
dadurch gekennzeichnet,
daß man die Reaktion an einem anorganischen Katalysator in Form von Füllkörpern, die oberhalb des Sumpfes angeordnet sind, durchführt.

2. Verfahren nach Anspruch 1,
dadurch gekennzeichnet,
daß die Reaktionen an einem Katalysator auf der Basis von Übergangsmetalloxiden durchgeführt wird.

3. Verfahren nach Anspruch 2,
dadurch gekennzeichnet,
daß der Katalysator Zirkondioxid und/oder Titandioxid enthält.

4. Verfahren nach Anspruch 1,
dadurch gekennzeichnet,
daß man die Reaktion an Katalysatoren in Form von Röhrchen und Ringen durchführt.

5. Verfahren nach Anspruch 1,
dadurch gekennzeichnet,
daß man die Reaktion im Temperaturbereich von 50 bis 300 °C durchführt.

6. Verfahren nach Anspruch 1,
dadurch gekennzeichnet,
daß Ether, Ester und Alkohole synthetisiert werden.

7. Verfahren nach Anspruch 1,
dadurch gekennzeichnet,
daß Ether, Ester und Alkohole gespalten werden.

8. Verfahren nach Anspruch 7,
dadurch gekennzeichnet,
daß eine Etherspaltung durchgeführt wird.

9. Verfahren nach Anspruch 1,
dadurch gekennzeichnet,
daß Olefindimerisierungen durchgeführt werden.

10. Reaktionsdestillationskolonne zur Durchführung chemischer Reaktionen gemäß Anspruch 1,
dadurch gekennzeichnet,
daß ein anorganischer Katalysator in Form von Füllkörpern oberhalb des Sumpfes angeordnet ist.
